(19) Europäisches Patentamt
European Patent Office
Office européen des brevets

(11) **EP 4 002 161 A1**

(12) **EUROPEAN PATENT APPLICATION**
published in accordance with Art. 153(4) EPC

(43) Date of publication:
**25.05.2022 Bulletin 2022/21**

(51) International Patent Classification (IPC):
***G06F 16/583*** (2019.01)

(21) Application number: **20918594.1**

(22) Date of filing: **03.11.2020**

(86) International application number:
**PCT/CN2020/126086**

(87) International publication number:
**WO 2021/159769 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2020 CN 202010088101**

(71) Applicant: **TENCENT TECHNOLOGY (SHENZHEN) COMPANY LIMITED**
**Shenzhen, GUANGDONG 518057, (CN)**

(72) Inventors:
• **MOU, Shuai**
**Shenzhen, Guangdong 518057 (CN)**
• **XIAO, Wanpeng**
**Shenzhen, Guangdong 518057 (CN)**
• **JU, Qi**
**Shenzhen, Guangdong 518057 (CN)**

(74) Representative: **EP&C**
**P.O. Box 3241**
**2280 GE Rijswijk (NL)**

(54) **IMAGE RETRIEVAL METHOD AND APPARATUS, STORAGE MEDIUM, AND DEVICE**

(57)   An image retrieval method and apparatus, a storage medium, and a device, relating to the technical field of artificial intelligence. The method comprises: obtaining an image, and performing feature extraction on the image according to a deep learning-based extraction mode to obtain a first feature; on the basis of the first feature, determining at least one candidate image matched with the image, and performing feature extraction on the image and each candidate image according to a non-deep learning-based extraction mode to obtain a manual feature; performing key point matching processing on the image and each candidate image in sequence on the basis of the manual feature; and determining a first image in the at least one candidate image having the number of key points matched with those of the image greater than a quantity threshold as an image retrieval result, wherein the number of matched key points between the first image and the image is greater than the quantity threshold. The method improves the retrieval efficiency and the retrieval precision.

FIG. 3

**Description**

RELATED APPLICATION

This application claims priority to Chinese Patent Application No. 202010088101.4, entitled "IMAGE RETRIEVAL METHOD AND APPARATUS, STORAGE MEDIUM, AND DEVICE" and filed on February 12, 2020, which is incorporated herein by reference in its entirety.

FIELD OF THE TECHNOLOGY

This application relates to the field of artificial intelligence (AI) technologies, and in particular, to an image retrieval method and apparatus, a storage medium, and a device.

BACKGROUND OF THE DISCLOSURE

Artificial intelligence (AI) is an emerging science and technology researched and developed currently for simulating, extending, and expanding human intelligence. At present, the AI technology has been widely applied to many scenarios such as an image retrieval scenario. In short, image retrieval is to retrieve an image similar to or the same as another from mass images, namely, search by image, where a user is allowed to input an image, to find another similar or same image.

Retrieval efficiency and retrieval precision in image retrieval are crucial and are important indicators for evaluating an image retrieval solution. Therefore, how to perform image retrieval to ensure image retrieval efficiency and retrieval precision becomes a problem to be resolved urgently by persons skilled in the art at present.

SUMMARY

Embodiments of the present disclosure provide an image retrieval method and apparatus, a storage medium, and a device. The technical solutions are as follows:

According to an aspect, an image retrieval method is provided, applicable to an image retrieval device, the method including:

obtaining an image, and performing feature extraction on the image with a first feature extraction scheme to obtain a first feature, the first feature extraction scheme being a deep learning-based extraction scheme;

determining, based on the first feature of the image, at least one candidate image matching the image, and performing feature extraction on the image and each candidate image with a second feature extraction scheme to obtain second features, the second feature extraction scheme being a non-deep learning-based extraction scheme; and

performing key point matching between the image and each candidate image sequentially based on the extracted manual feature; and determining in the at least one candidate image, a first image in which a quantity of key points matching with key points in the image is greater than a quantity threshold, as an image retrieval result.

According to another aspect, an image retrieval apparatus is provided, including:

an obtaining module, configured to obtain an image;

a first feature extraction module, configured to perform feature extraction on the image with a first feature extraction scheme to obtain a first feature, the first feature extraction scheme being a deep learning-based extraction scheme;

a first retrieval module, configured to determine, based on the first feature of the image, at least one candidate image matching the image;

a second feature extraction module, configured to perform feature extraction on the image and each candidate image with a second feature extraction scheme to obtain second features, the second feature extraction scheme being a non-deep learning-based extraction scheme; and

a second retrieval module, configured to perform key point matching between the image and each candidate image sequentially based on the extracted second features; and determine in the at least one candidate image, a first image in which a quantity of key points matching with key points in the image is greater than a quantity threshold, as an image retrieval result.

In a possible implementation, the deep learning model includes a convolutional neural network (CNN), a clustering branch, and a classification branch, and the apparatus further includes:
a training module, configured to input sample images included in the first training dataset and the second training dataset into the CNN; invoke a clustering model of the clustering branch, iteratively cluster feature data outputted by the CNN, and output a clustering result as a pseudo-label to the classification branch; and invoke a classifier of the classification branch, obtain a pseudo-label-based loss value, and iteratively update a weight of the CNN according to the loss value.

In a possible implementation, the training module is further configured to obtain the pseudo-label-based loss value according to the pseudo-label and a result of classification performed by the classifier on the feature data outputted by the CNN

In a possible implementation, the training module is further configured to obtain normalized mutual information (NMI) of results of two adjacent rounds of clustering, the NMI indicating stability of the deep learning model, and a larger value of the NMI indicating that the deep learning model is closer to a convergence state; and determine the convergence state of the deep learning model according to the NMI, and terminate the model training process after the deep learning model reaches the convergence state, a convergence condition of the deep learning model being that the value of the NMI reaches a stable value.

In a possible implementation, the first retrieval module is further configured to obtain feature distances between the first feature of the image and first features stored in a feature database, and sort retrieval images corresponding to the stored first features in descending order of the feature distances; and determine a specified quantity of retrieval images ranked top as the at least one candidate image.

In a possible implementation, the second feature extraction module is further configured to obtain a first feature of each candidate image in the at least one candidate image; and obtain a feature distance between the first feature of each candidate image and the first feature of the image, and perform second feature extraction on a second image in the at least one candidate image, where

a feature distance between the second image and the image is less than a first distance threshold.

In a possible implementation, the apparatus further includes:

a receiving module, configured to receive an image retrieval request transmitted by a terminal;

the obtaining module being further configured to obtain the image from the image retrieval request; and

a transmission module, configured to transmit, after obtaining the image retrieval result, the image retrieval result to the terminal.

In a possible implementation, the second feature extraction module is further configured to perform, for any image on which feature extraction is to be performed, key point detection to obtain a plurality of key points; and establish a descriptor for each detected key point, the descriptor being represented by a feature vector of a fixed dimension.

In a possible implementation, the second retrieval module is further configured to obtain a first set of key point descriptors of the image and a second set of key point descriptors of any candidate image; determine a feature distance between any two key point descriptors, one of the any two key point descriptors being from the first set of key point descriptors, and the other key point descriptor being from the second set of key point descriptors; determine matched key points in the image and the candidate image based on the obtained feature distance, any pair of matched key points having a feature distance less than a second distance threshold; and filter the matched key points to obtain final matched key points.

In a possible implementation, the second feature is a scale-invariant feature transform (SIFT) feature.

According to another aspect, a storage medium is provided, storing at least one instruction, the at least one instruction being loaded by a processor to implement the following operations: obtaining an image, and performing feature extraction on the image with a first feature extraction scheme to obtain a first feature, the first feature extraction scheme being a deep learning-based extraction scheme; determining, based on the first feature of the image, at least one candidate image matching the image, and performing feature extraction on the image and each candidate image with a second feature extraction scheme to obtain second features, the second feature extraction scheme being a non-deep learning-based extraction scheme; and performing key point matching between the image and each candidate image sequentially based on the extracted second features, and determining in the at least one candidate image, a first image in which a quantity of key points matching with key points in the image is greater than a quantity threshold, as an image retrieval result.

According to another aspect, an image retrieval device is provided, including a processor and a memory, the memory storing at least one instruction, the at least one instruction being loaded by the processor to implement the following operations: obtaining an image, and performing feature extraction on the image with a first feature extraction scheme to obtain a first feature, the first feature extraction scheme being a deep learning-based extraction scheme; determining, based on the first feature of the image, at least one candidate image matching the image, and performing feature extraction on the image and each candidate image with a second feature extraction scheme to obtain second features, the second feature extraction scheme being a non-deep learning-based extraction scheme; and performing key point matching between the image and each candidate image sequentially based on the extracted second features, and determining in the at least one candidate image, a first image in which a quantity of key points matching with key points in the image is greater than a quantity threshold, as an image retrieval result.

BRIEF DESCRIPTION OF THE DRAWINGS

For clearer illustration of the technical solutions according to the embodiments of the present disclosure, the following briefly describes the drawings used for describing the embodiments. Apparently, the drawings in the following description show only some embodiments of the present disclosure, and a person of ordinary skill in the art may derive other drawings based on these drawings without creative efforts.

FIG. 1 is a schematic diagram of an application environment involved in an image retrieval method according to an embodiment of the present disclosure.

FIG. 2 is a schematic diagram of performing image retrieval based on two layers of algorithm logic according to an embodiment of the present disclosure.

FIG. 3 is a flowchart of an image retrieval method according to an embodiment of the present disclosure.

FIG. 4 is a schematic structural diagram of a deep learning model according to an embodiment of the present disclosure.

FIG. 5 is a flowchart of training a deep learning model according to an embodiment of the present disclosure.

FIG. 6 is a schematic structural diagram of a convolutional neural network according to an embodiment of the present disclosure.

FIG. 7 is a schematic diagram of training a deep learning model according to an embodiment of the present disclosure.

FIG. 8 is a schematic diagram of performing key point matching according to an embodiment of the present disclosure.

FIG. 9 is an overall flowchart of an image retrieval method according to an embodiment of the present disclosure.

FIG. 10 is a schematic structural diagram of an image retrieval apparatus according to an embodiment of the present disclosure.

FIG. 11 is a schematic structural diagram of an image retrieval device according to an embodiment of the present disclosure.

DESCRIPTION OF EMBODIMENTS

Hereinafter embodiments of the present disclosure are described in detail in conjunction with the drawings, to facilitate understanding the objectives, technical solutions, and advantages of the present disclosure.

Artificial intelligence (AI) refers to theory, method, technology, and application system that utilize a digital computer or a machine controlled by the digital computer to simulate, extend, and expand human intelligence, perceive an environment, obtain knowledge, and obtain an optimal result based on knowledge. In other words, AI is a comprehensive technology in computer science and attempts to understand the essence of intelligence and produce a new intelligent machine that can react in a manner similar to human intelligence. AI is to study the design principles and implementations of various intelligent machines, to endow the machines with the functions of perception, reasoning, and decision-making.

AI technology is a comprehensive discipline, covering a wide range of fields and involving both hardware technologies and software technologies. The basic AI technologies generally include technologies such as sensor, dedicated AI chip, cloud computing, distributed storage, big data processing technology, operating/interaction system, and electromechanical integration. AI software technologies mainly include several major directions such as computer vision (CV) technology, speech processing technology, natural language processing technology, and machine learning/deep learning.

CV technology is a science that studies how to use a machine to "see", and furthermore, that uses a camera and a computer to replace human eyes to realize machine vision such as recognition, tracking, and measurement on a target, and further perform graphic processing, so that the computer processes the target into an image more suitable for observation with human eyes or more suitable for transmission to an instrument for detection. As a scientific discipline, CV studies theories and technologies and attempts to establish an AI system that can obtain information from images or multidimensional data.

CV technologies generally include technologies such as image processing, image recognition, image semantic understanding, image retrieval, optical character recognition (OCR), video processing, video semantic understanding, video content/behavior recognition, three-dimensional object reconstruction, 3D technology, virtual reality, augmented reality, synchronous positioning, and map construction, and further include biological feature recognition technologies such as face recognition and fingerprint recognition.

Machine learning (ML) is a multi-disciplinary subject involving various disciplines such as probability theory, statistics, approximation theory, convex analysis, and algorithm complexity theory. ML specializes in studying how a computer simulates or implements a human learning behavior to obtain new knowledge or skills, and reorganize existing knowledge structure, so as to keep improving its performance. ML is the core of AI, is a basic way to make the computer intelligent, and is applied to various fields of AI.

ML and deep learning generally include technologies such as artificial neural network, belief network, reinforcement learning, transfer learning, inductive learning, and learning from demonstrations. The deep learning is a new research direction in the field of ML

With the research and progress of the AI technology, the AI technology is studied and applied in a plurality of fields such as commonly known smart home, smart wearable device, virtual assistant, smart speaker, smart marketing, unmanned driving, automatic driving, unmanned aerial vehicle, robot, smart medical care, and smart customer service. It is believed that with the development of technologies, the AI technology will be applied to more fields, and play an increasingly important role.

The solutions provided in the embodiments of the present disclosure involve technologies such as image retrieval and deep learning of AI. That is, the solutions provided in the embodiments of the present disclosure may be applied to an image retrieval scenario, for example, may be applied to an image homologous similarity matching scenario, which is described below in connection with the following embodiments.

First, some terms or abbreviations used in the embodiments of the present disclosure are explained.

Supervised learning: a network training method in which training data includes labels. Through training with the training data, a machine can independently identify a relationship between features and labels, so that when facing data only including features and without labels, the machine can determine the labels. That is, supervised learning is a method for training a network by using training data with known labels.

Unsupervised learning: a network training method in which labels of training data are unknown. A training target is to disclose intrinsic properties and principles of data based on learning of training data without labels, to provide foundation for subsequent data analysis.

That is, unsupervised learning is suitable for situations in which there is training data without labels. Among this type of learning tasks, clustering is most-studied and most-widely used.

Semi-supervised learning: using some sample data with labels and some sample data without labels to train a model in ML.

In other words, for semi-supervised learning, the training data includes both sample data with labels and sample data not labeled, so that without manual intervention, a machine can automatically use the sample data that is not labeled to improve learning performance without depending on external interaction.

Generally, semi-supervised learning combines a large amount of sample data that is not labeled and a small amount of sample data with labels in a training stage. Compared with a model that performs training using sample data all with labels, a model obtained through training using a large amount of sample data that is not labeled and a small amount of sample data with labels is more accurate and has lower training costs.

Clustering: a process of dividing samples included in a dataset into a plurality of subsets that generally do not intersect with each other, in which each subset is referred to as a cluster.

Deep clustering: a clustering method integrating learning neural network parameters and obtaining feature cluster distribution. That is, deep clustering is to combine deep learning with clustering. Compared with conventional clustering methods, the deep clustering method is relatively simple, a network structure is easy to understand, and a clustering effect is also better than most conventional clustering methods.

Deep learning: this concept is derived from research on artificial neural network. For example, a multi-layer sensor including a plurality of hidden layers is a deep learning structure. Deep learning forms a more abstract high-level feature by combining low-level features, so as to discover distributed feature representation of data.

In other words, deep learning is a method based on data representation learning. An observed value (for example, an image) may be represented by using a plurality of methods. For example, the image may be represented by a vector of intensity values of pixels in the image, or the image may be represented as a series of edges or regions in specific shapes in a more abstract manner. Task-based learning using some specific representation methods, such as face recognition or facial expression recognition, is prone to learn from examples. Deep learning uses non-supervised or supervised feature learning and efficient algorithm of layered feature extraction to replace manual feature obtaining, thereby having higher efficiency.

Convolutional neural network (CNN): one of representative algorithms of deep learning, and is a feedforward neural network that involves convolution calculation and has a deep structure.

Deep feature: a feature extracted based on deep learning. In the embodiments of the present disclosure, a deep feature refers to an intermediate feature vector outputted by a high-level hidden layer of a neural network (such as the CNN).

The deep feature is also referred to as a first feature in this specification. That is, the first feature is a feature extracted with a first feature extraction scheme, and the first feature extraction scheme is a deep learning-based extraction scheme.

Manual feature: a feature extracted based on non-deep learning, namely, a feature extracted with a manually designed feature extraction scheme.

The manual feature is also referred to as a second feature in this specification. That is, the second feature is a feature extracted with a second feature extraction scheme, and the second feature extraction scheme is a non-deep learning-based extraction scheme.

Scale-invariant feature transform (SIFT) feature: SIFT is a description used in the field of image processing. This description has scale invariance, can detect key points from an image, and is a local feature description.

The SIFT feature is a local feature of an image, which has good invariance for translation, rotation, scale zooming, brightness change, blocking, and noise, and may also ensure a certain degree of stability for visual change and affine transformation. That is, the SIFT feature not only has scale invariance, but also performs well in detection even with varying rotation angles, image brightness, or photographing perspectives. In other words, SIFT feature is a very stable local feature.

Homologous similar: in the embodiments of the present disclosure, being homologous similar refers to the case that two images are exactly the same in contents, or only slightly different in photographing perspective, image capturing, stretching, remaking or the like.

In the present disclosure, an entity for executing the steps, namely, an image retrieval device may be a computer device. The computer device may be any electronic device having processing and storage capabilities, such as a mobile phone, a tablet computer, a game device, a multimedia playback device, an electronic photo frame, a wearable device, a personal computer (PC), or an on-board computer, or may be a server. Illustrative examples used in the description of the following method embodiments do not constitute a limitation to the present disclosure.

An application environment involved in the image retrieval method provided according to this embodiment of the present disclosure is described below in detail.

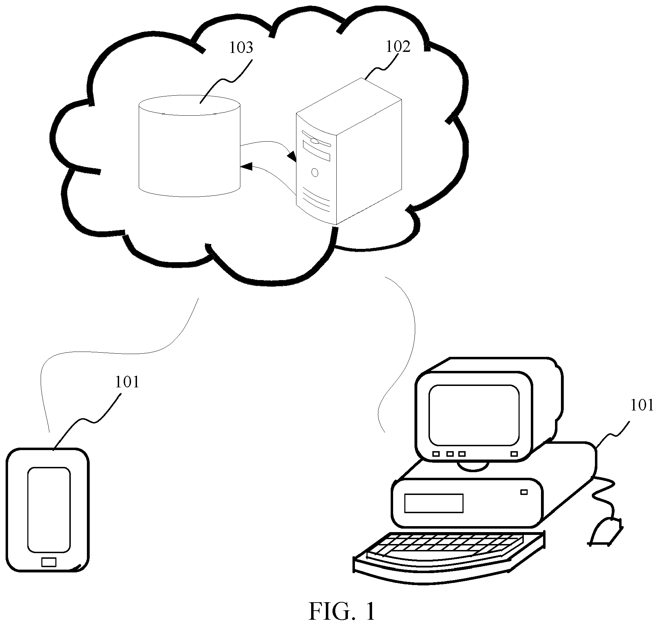

For example, referring to FIG. 1, the application environment may include terminals 101, an image retrieval device 102, and a feature database 103.

For example, the image retrieval device 102 may be a server. The image retrieval device 102 and the feature database 103 may be provided on the same server or may be distributed on different servers, which is not limited in the embodiments of the present disclosure. In an example, the terminal 101 and the image retrieval device 102 may perform Internet communication in a client/server mode. In addition, one server may be configured to be accessed by a plurality of clients.

In this embodiment of the present disclosure, the terminals 101 may be, but not limited to, a mobile terminal and a fixed terminal. In an example, the mobile terminal includes, but not limited to, a smartphone, a tablet computer, a notebook computer, an E-reader, a moving picture experts group audio layer III (MP3) player, or a moving picture experts group audio layer IV (MP4) player; and the fixed terminal includes, but not limited to, a desktop computer.

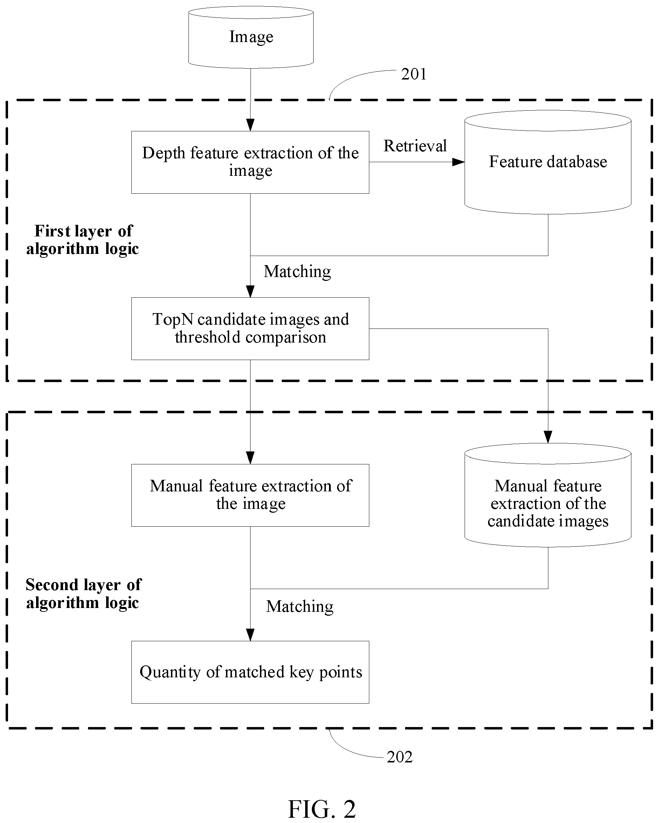

Based on the foregoing application environment, after obtaining an image, the terminal 101 may upload the image to the image retrieval device 102, and the image retrieval device 102 performs the image retrieval method provided in this embodiment of the present disclosure. The image retrieval method provided in this embodiment of the present disclosure adopts two layers of algorithm logic shown in FIG. 2, i.e., a first layer of algorithm logic 201 and a second layer of algorithm logic 202, namely, adopts a two-layer structure shown in FIG. 2. In an exemplary application scenario, homologous similarity matching of images may be performed with the two-layer structure according to the embodiment of the present disclosure.

In this embodiment of the present disclosure, depth feature quality of an image is ensured through semi-supervised learning. Possible matched objects may be determined from the feature database 103 based on feature distance comparison of depth features of images in the first layer of algorithm logic 201. Then, whether further verification needs to be performed by using the second layer pf algorithm logic 202 is determined according to a threshold. The second layer of algorithm logic is used for retrieving a final matched object from the determined possible matched objects based on a similarity matching of manual features of images, to ensure the retrieval precision and retrieval efficiency.

That is, in this embodiment of the present disclosure, the depth feature quality of the image is ensured through semi-supervised learning, image recall is ensured by using the first layer of algorithm logic 201, and a calculation magnitude in connection with the similarity matching performed by the second layer of algorithm logic 202 based on the manual feature is reduced through threshold control and an image candidate mechanism, so that the usability of the image retrieval method may be greatly improved while ensuring the image recall rate and the retrieval precision, thereby shortening time consumption and ensuring efficiency of the image retrieval.

The image retrieval method provided according to this embodiment of the present disclosure is described below in detail with reference to the following embodiments.

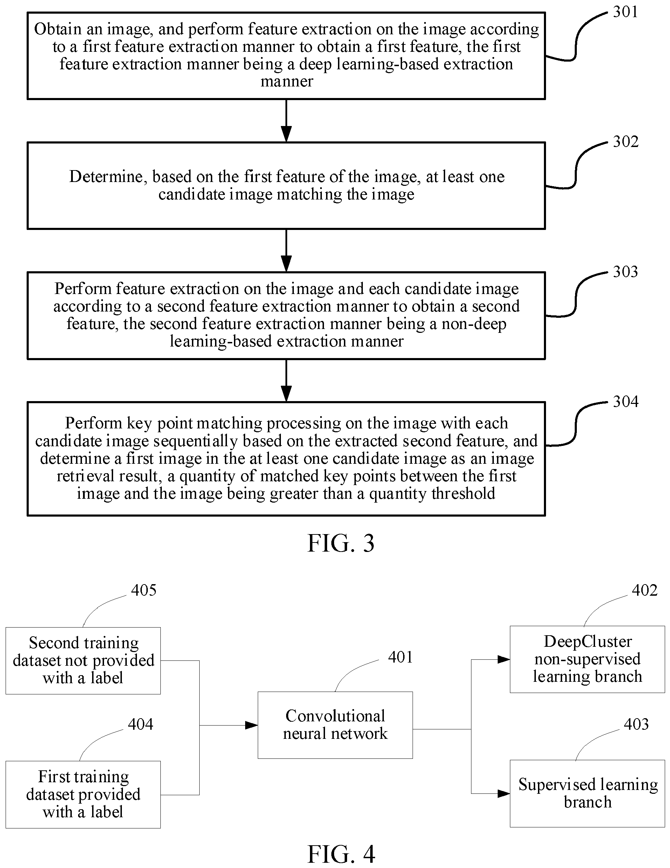

FIG. 3 is a flowchart of an image retrieval method according to an embodiment of the present disclosure. The method is performed by the image retrieval device 102 shown in FIG. 1. Referring to FIG. 3, the method provided in this embodiment of the present disclosure includes the following steps.

In 301, an image is obtained, and feature extraction is performed on the image with a first feature extraction scheme to obtain a first feature, the first feature extraction scheme being a deep learning-based extraction scheme.

The first feature refers to a depth feature extracted based on the deep learning-based extraction scheme.

In a possible implementation, the image retrieval device obtaining an image includes, but is not limited to: receiving an image retrieval request transmitted by a terminal, and obtaining the image from the image retrieval request. That is, the image retrieval device may perform image retrieval in response to the image retrieval request transmitted by the terminal. For example, the terminal may transmit an image retrieval request to the image retrieval device by using a POST method, which is not limited in the embodiments of the present disclosure.

Generally, before the image retrieval device performs image retrieval, a process of constructing a feature database is further included according to this embodiment of the present disclosure. In this embodiment of the present disclosure, the feature database stores depth features of mass images. The mass images may be collected in advance. The mass images collected in advance are also referred to as "retrieval images". Correspondingly, after the feature database is constructed, the image retrieval device may process image retrieval requests initiated by terminals based on the feature database.

A process of performing depth feature extraction on the retrieval images is described later.

In this embodiment of the present disclosure, depth feature extraction may be performed on the image with a deep learning model. The deep learning model is trained with a first training dataset with labels and a second training dataset without labels. That is, to ensure the depth feature quality of the image, in this embodiment of the present disclosure, a semi-supervised learning method is used, and some sample data with labels and some sample data without labels are used to train a model.

In other words, for semi-supervised learning, the training data includes both sample data with labels and sample data not labeled. For example, semi-supervised learning combines a large amount of sample data not labeled and a small amount of sample data with labels in a training stage. That is, a quantity of samples included in the first training dataset is less than a quantity of samples included in the second training dataset. The first training dataset may be an ImageNet dataset, which is not limited in the embodiments of the present disclosure.

A process of training the deep learning model is described later.

In 302, at least one candidate image matching the image is determined based on the first feature of the image.

In this embodiment of the present disclosure, the at least one candidate image may include one candidate image or may include a plurality of candidate images.

As shown by the first layer of algorithm logic 201 in FIG. 2, after extracting the depth feature of the image, the image retrieval device may perform image matching in the feature database, to determine possible matched objects. The determining, based on the first feature of the image, at least one candidate image matching the image includes, but is not limited to: obtaining feature distances between the depth feature of the image and depth features stored in the feature database, and sorting retrieval images corresponding to the stored depth features in descending order of the feature distances; and determining a specified quantity of retrieval images ranked top as the at least one candidate image.

As can be seen, in this embodiment of the present disclosure, the feature distances between the depth feature of the image and the depth features stored in the feature database may be calculated, and accordingly top N candidate images may be determined as possible matched objects based on the feature distances.

That is, the at least one candidate image matching the image is determined by using a TopN mechanism. The specified quantity, namely, a value of N, may be set in advance, and the value of N may be a positive integer, for example, may be 5, 10, or 15, which is not limited in the embodiments of the present disclosure. The feature distance may be a Euclidean distance.

In addition, for any candidate image, if a feature distance between the image and the candidate image is less than a first distance threshold, for example, a Euclidean distance between the two is less than a set threshold $\alpha$, the candidate image is outputted to the second layer of algorithm logic 202 for processing. For a detailed description, reference may be made to the step 303.

In 303, feature extraction is performed on the image and each candidate image with a second feature extraction scheme to obtain second features, the second feature extraction scheme being a non-deep learning-based extraction scheme.

The second feature refers to a manual feature extracted based on the non-deep learning-based extraction scheme.

This step corresponds to the second layer of algorithm logic 202 in FIG. 2. As described in step 302, the manual feature extraction in this step is performed on the candidate image whose feature distance from the image is less than the first distance threshold. If the feature distances between the TopN candidate images and the image are all less than the first distance threshold, manual feature extraction is performed on all the TopN candidate images in this step.

That is, performing manual feature extraction on the at least one candidate image further includes: performing manual feature extraction on a second image in the at least one candidate image, where a feature distance between the second image and the image is less than the first distance threshold. In a possible implementation, the manual feature includes, but is not limited to, a scale-invariant feature transform (SIFT) feature, a speeded up robust feature (SURF) feature, and an oriented fast and rotated brief (ORB) feature, which is not limited in the embodiments of the present disclosure.

In 304, key point matching between the image and each candidate image is performed sequentially based on the extracted second features; and a first image in the at least one candidate image, in which a quantity of key points matching with key points in the image is greater than a quantity threshold, is determined as an image retrieval result.

As shown in FIG. 2, after respectively extracting the manual feature of the image and the manual feature of each candidate image inputted into the second layer of algorithm logic 202, the second layer of algorithm logic 202 may calculate a quantity of matched key points between the image and each candidate image sequentially.

In example one, if the quantity of matched key points between the image and a candidate image is greater than a set threshold $\beta$, it is determined that image retrieval succeeds, and subsequent retrieval process is terminated. That is, the image retrieval result may include only one retrieval image that is homologous similar to the image.

In example two, the image retrieval result may further include a plurality of retrieval images that are homologous similar to the image. That is, all candidate images for which the quantity of key points matching with the image exceeds the set threshold β are used as the image retrieval result.

According to the method provided in this embodiment of the present disclosure, the image retrieval is performed by a combination of the depth feature and the manual feature and hence has advantages of the two kinds of features, where performing image retrieval based on the depth feature has relatively low calculation costs, and performing image retrieval based on the manual feature has advantages in the aspect of retrieval precision. This embodiment of the present disclosure includes two layers of algorithm logic. The first layer of algorithm logic may extract a depth feature and performs image screening based on the extracted depth feature. Only selected candidate images are inputted into the second layer of algorithm logic for manual feature extraction, which greatly reduces a calculation amount in the second layer of algorithm logic for performing image matching based on the manual feature, and ensures the retrieval efficiency. Image matching is performed again based on the manual feature after images are screened based on the depth feature, so that the retrieval precision is ensured. In addition, the first layer of algorithm logic uses a semi-supervised learning method, so that the depth feature quality may be further greatly improved. That is, in this embodiment of the present disclosure, the image retrieval precision is effectively improved while ensuring the retrieval efficiency.

In an exemplary embodiment, a process of training a deep learning model in the first layer of algorithm logic is included.

For example, FIG. 4 shows a structure of the deep learning model. As shown in FIG. 4, the deep learning model includes a convolutional neural network (CNN) 401, a clustering branch (non-supervised learning branch) 402, and a classification branch (supervised learning branch) 403. Both the first training dataset 404 and the second training dataset are inputted into the CNN 401 for depth feature extraction.

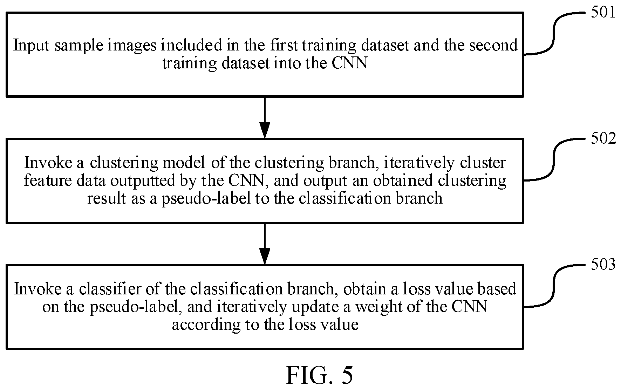

The deep learning model may be trained on the image retrieval device, or may be trained on another device and then transmitted by the device to the image retrieval device. Referring to FIG. 5, the process of training the deep learning model includes, but is not limited to, the following steps.

In 501, sample images included in the first training dataset and the second training dataset are inputted into the CNN

As shown in FIG. 4, the sample images included in the first training dataset 404 and the second training dataset 405 may all be inputted into the CNN 401 for depth feature extraction. That is, a semi-supervised learning method is used in this embodiment of the present disclosure to ensure the depth feature quality. As an example, semi-supervised learning combines a large amount of sample images that are not labeled and a small amount of sample images with labels in a training stage. That is, a quantity of sample images included in the first training dataset is less than a quantity of sample images included in the second training dataset.

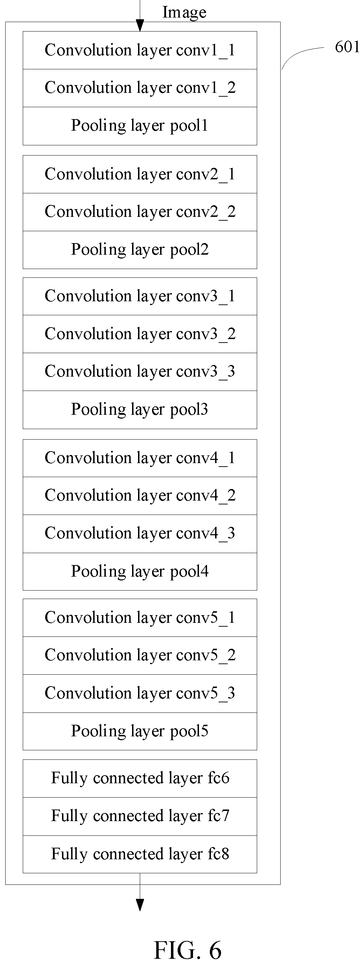

In a possible implementation, the CNN 401 may be an AlexNet or a VGG16, which is not limited in the embodiments of the present disclosure. FIG. 6 shows a possible structure 601 of the VGG16. As shown in FIG. 6, convolution layers and pooling layers of the VGG16 may be divided into different blocks, which are numbered Block1 to Block5 sequentially from front to back. Each block includes a plurality of convolution layers and one pooling layer. In FIG. 6, each of Block1 and Block2 includes two convolution layers, and each of Block3 to Block5 includes three convolution layers. In addition, convolution layers in the same block have generally the same quantity of channels.

In 502, a clustering model of the clustering branch is invoked for iteratively clustering feature data outputted by the CNN, and outputting a clustering result as a pseudo-label to the classification branch.

In this embodiment of the present disclosure, the deep learning model in the first layer of algorithm logic is trained by using a DeepCluster non-supervised learning algorithm in combination with data fitting of the supervised learning-based ImageNet. A non-supervised learning process is constrained by using labelled data, to ensure feature availability while fitting non-labelled data. The model may be trained with multi-task learning, and this is not limited in the embodiments of the present disclosure.

The deep learning model combines two tasks: clustering and classification. The two tasks use the same CNN and share network parameter of the CNN. The clustering result obtained in the clustering branch 402 is used as a pseudo-label, which is provided to a classifier of the classification branch 403, for classification training of the network parameter of the CNN. The two tasks are mutually improved in the mutual learning mode and each achieves better effect.

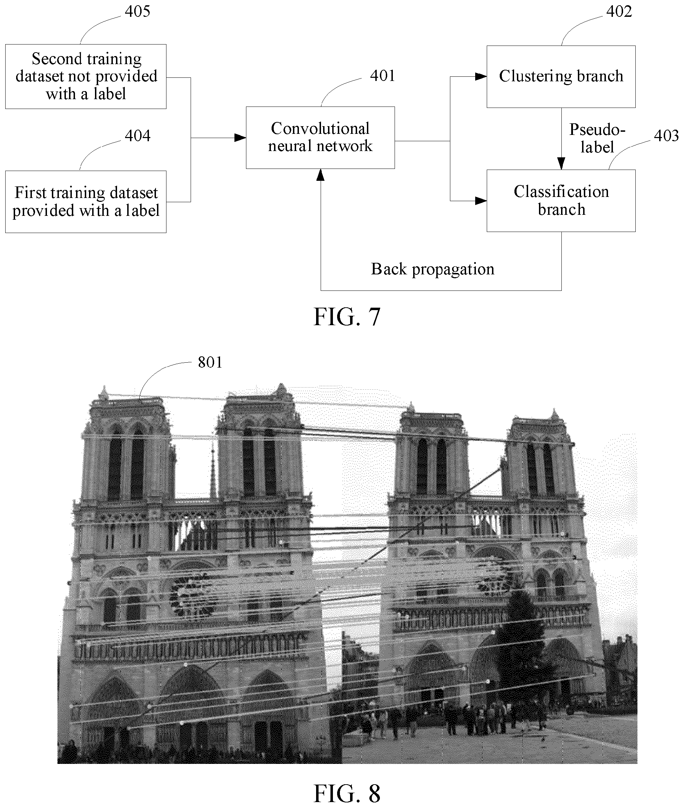

As shown in FIG. 7, the sample images included in the first training dataset 404 and the second training dataset 405 are inputted into the CNN 401 of the deep learning model. An output of the CNN 401 is divided into two branches, where one is the clustering branch 402, and one is the classification branch 403. Feature data outputted by the CNN 401 may be inputted into a clustering model of the clustering branch 402 for clustering. For example, the clustering model may use a common K-means algorithm. The classification branch 403 includes a classifier. The two branches share the network parameter of the CNN, the clustering result is provided as a pseudo-label to the classifier for training, and the network parameter of the CNN is in turn optimized by the classification training.

Based on the above, a core idea of the Deep-Cluster is to generate pseudo-labels by iteratively using the clustering branch 402, and provide the pseudo-labels to the classification branch 403 for performing classification training iteratively, to update the network parameter of the CNN

The two processes are sequentially performed repeatedly. That is, the foregoing training process is an iteration process of extracting feature data, feature data clustering, training the classification task by using a pseudo-label obtained through clustering, updating network parameters, and extracting feature data again by using the CNN

In 503, a classifier of the classification branch is invoked for obtaining a pseudo-label-based loss value, and iteratively updating a weight of the CNN according to the loss value.

In this embodiment of the present disclosure, update of the network parameter, namely, the classification training is performed in the classification branch, so that a network loss may be a classification loss. That is, in this embodiment of the present disclosure, the network parameter is updated according to the pseudo-label-based loss value. The network parameter in this specification may be also referred to as a weight of the CNN

In a possible implementation, the obtaining a pseudo-label-based loss value includes, but is not limited to, obtaining the pseudo-label-based loss value according to the pseudo-label and a result of classification performed by the classifier on the feature data outputted by the CNN

For example, the pseudo-label-based loss value may be expressed by using the following formula:

$$\min_{\theta, W} \frac{1}{N} \sum_{n=1}^{N} l\big(gw\big(f_\theta(x_n)\big), y_n\big)$$

where $f_\theta(x_n)$ represents feature mapping of an input x performed by the CNN under a network parameter $\theta$, gw(.) represents a result of classification performed by the classifier on the features; 1(-, y) represents a multinomial logic loss and is generally used for a one-to-many classification task, namely, a softmax loss; $y_n$ represents a cluster to which a sample n belongs, where $y_n$ may be a k-dimensional vector formed by 0 and 1, and if it is assumed that the sample n belongs to a $0^{th}$ cluster, $y_n$ =[1, 0, 0, 0, ..., 0]; and k is a quantity of cluster centers, and N is a quantity of samples.

In the iterative training process, in each round, the stability of the deep learning model is determined by using normalized mutual information (NMI) of the clustering result, higher NMI indicates that distribution of clustering results of two adjacent rounds is more consistent, and the deep learning model is closer to a convergence state. That is, the method provided in this embodiment of the present disclosure further includes: obtaining NMI of clustering results of two adjacent rounds, the NMI indicating the stability of the deep learning model, and a larger value of the NMI indicating that the deep learning model is closer to a convergence state; and determining the convergence state of the deep learning model according to the NMI, and terminating the model training process after the deep learning model reaches the convergence state, a convergence condition of the deep learning model being that the value of the NMI reaches a stable value.

For example, the NMI may be expressed by using the following formula:

$$NMI(A;B) = \frac{I(A;B)}{\sqrt{H(A)H(B)}}$$

where A and B represent the clustering results of two adjacent rounds, I is a formula for calculating mutual information, and H is a formula for calculating an entropy. As an example, a value range of the NMI is [0, 1].

In an example, the stable value may be 0.8. For example, if the value of the NMI no longer rises after reaching 0.8, the deep learning model reaches the convergence state in this case.

In this embodiment of the present disclosure, the deep learning model is trained by using a deep clustering-based model training method, so that when depth feature extraction is performed with the trained deep learning model, the depth feature quality and retrieval precision may be ensured, and an image recall rate is also ensured, thereby effectively ensuring a coverage of the image retrieval method.

The foregoing steps 303 and 304 are described according to an exemplary embodiment by taking the example in which the manual feature is an SIFT feature.

Extraction of the SIFT feature is generally divided into the following several steps:

   a. Extracting key points.
   For example, several key points in the image may be detected by establishing a difference of Gaussian (DOG) function, which is not limited in the embodiments of the present disclosure.

   b. Adding detailed information (a local feature), namely, a descriptor, for each key point.

Each key point includes three kinds of information: a position, a scale, and a direction. Next, a descriptor is established for each detected key point, namely, a group of vectors are used to describe each key point, which will not change along with various changes such as illumination changes and perspective changes. In addition, the descriptor is to have relatively high uniqueness, for improving a matching probability of the feature point.

The extraction of the key points and the adding of the detailed information for each key point may be referred to as SIFT feature generation, namely, extracting, from the image, feature vectors irrelevant to scale zooming, rotation, and brightness changes.

For example, a 64-dimensional or 128-dimensional SIFT feature may be extracted for each key point, which is not limited in the embodiments of the present disclosure. For example, in an actual application, to enhance the matching stability, 4x4, namely, 16 seed points may be used to describe a key point, and each seed point is associated with a vector of 8 directions, so that a 128-dimensional SIFT feature vector may be generated for one key point.

The foregoing steps a and b correspond to the foregoing step 303. Hence, SIFT feature extraction may be performed in this way on the image and on each candidate image. That is, as an example, the performing feature extraction on the image and each candidate image with a second feature extraction scheme includes, but is not limited to, performing, for any image on which SIFT feature extraction is to be performed, key point detection to obtain a plurality of key points; and establishing a descriptor for each detected key point, the descriptor being represented by a feature vector of a fixed dimension.

c. Determining several pairs of key points mutually matching with each other through one-to-one comparison of key points (generally key points with feature vectors) in the image and the candidate image, namely, establishing a correspondence of scenery between the images.

In a possible implementation, random sample consensus (RANSAC) verification may be performed on the matched key points, to eliminate stray key point pairs, so as to determine a quantity of final matched key points. If the quantity of the matched key points is greater than a set quantity threshold, it is determined that matching succeeds. FIG. 8 shows an effect diagram of performing key point matching on a building 801. As can be seen from FIG. 8, the quantity of key points involved in key point matching is very huge.

This step corresponds to the foregoing step 304. Hence, key point matching between the image and each candidate image may be performed sequentially in this way, which may be performed with reference to this step. In other words, the performing key point matching between the image and each candidate image sequentially based on the extracted second features includes, but is not limited to:

obtaining a first set of key point descriptors of the image and a second set of key point descriptors of any candidate image, the two sets including key point descriptors; determining a feature distance between any two key point descriptors, one of the any two key point descriptors being from the first set of key point descriptors, and the other key point descriptor being from the second set of key point descriptors; determining matched key points in the image and the candidate image based on the obtained feature distance, any pair of matched key points having a feature distance less than a second distance threshold; and filtering the matched key points to obtain final matched key points.

As an example, the feature distance between key point descriptors may be a Euclidean distance, which is not limited in the embodiments of the present disclosure.

In this embodiment of the present disclosure, the image retrieval precision may be ensured by SIFT feature-based similarity matching.

In an exemplary embodiment, the overall execution procedure of the image retrieval method provided in this embodiment of the present disclosure is described with reference to the application environment shown in FIG. 1.

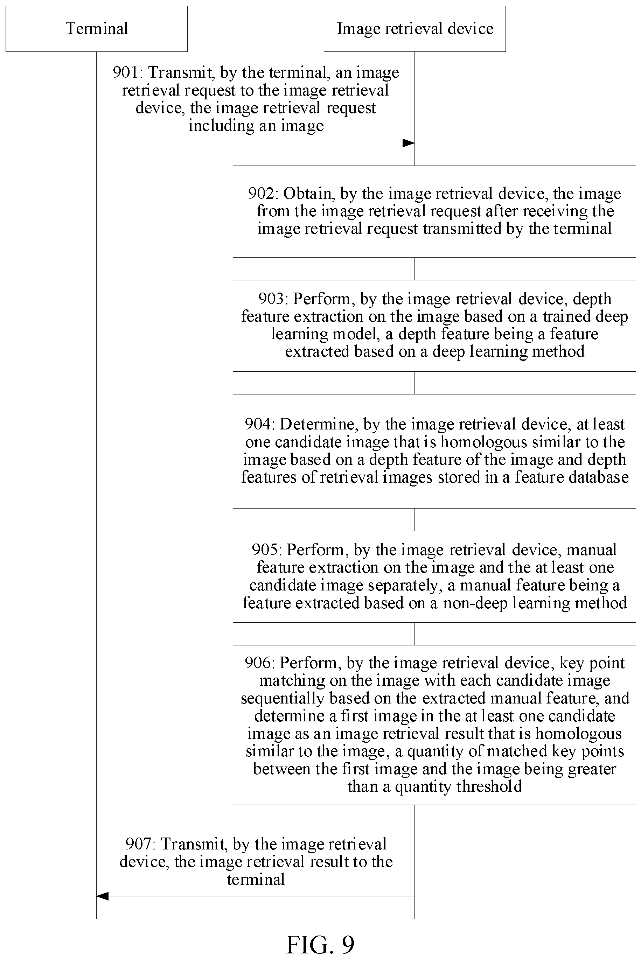

Using a scenario in which homologous similar image retrieval is performed as an example, execution of the method involves a terminal, an image retrieval device, and a feature database. Referring to FIG. 9, the overall execution procedure of the method includes, but is not limited to, the following steps:

901: Transmitting, by the terminal, an image retrieval request to the image retrieval device, the image retrieval request including an image.

902: Obtaining, by the image retrieval device, the image from the image retrieval request after receiving the image retrieval request transmitted by the terminal.

903: Performing, by the image retrieval device, feature extraction on the image with a trained deep learning model.

904: Determining, by the image retrieval device, at least one candidate image that is homologous similar to the image based on a depth feature of the image and depth features of retrieval images stored in the feature database.

For example, for the at least one candidate image, a process of calculating a feature distance between each candidate image and the image, and comparing the calculated feature distance with the first distance threshold may be further included. In a case that the feature distance is less than the first distance threshold, the candidate image is outputted to the second layer of algorithm logic for manual feature extraction.

905: Performing, by the image retrieval device, manual feature extraction on the image and the at least one candidate image separately.

906: Performing, by the image retrieval device, key point matching between the image and each candidate image sequentially based on the extracted manual feature; and determining a first image in the at least one candidate image, in which a quantity of key points matching with key points in the image is greater than a quantity threshold, as an image retrieval result that is homologous similar to the image.

907: Transmitting, by the image retrieval device, the image retrieval result to the terminal.

The method provided in this embodiment of the present disclosure at least has the following beneficial effects:
According to this embodiment of the present disclosure, the image retrieval is performed by a combination of the depth feature and the manual feature and hence has advantages of the two kinds of features, where performing image retrieval based on the depth feature has relatively low calculation costs, and performing image retrieval based on the manual feature has advantages in the aspect of retrieval precision. In this embodiment of the present disclosure, image retrieval is performed by using a two-layer structure, namely, image retrieval is performed by using two layers of algorithm logic. The first layer of algorithm logic extracts depth features, performs feature distance comparison, performs image screening based on a distance threshold, and inputs selected images into the second layer of algorithm logic for manual feature extraction, which greatly reduces a calculation amount in the second layer of algorithm logic for performing image matching based on the manual feature. In addition, the first layer of algorithm logic uses a semi-supervised learning method, so that the depth feature quality may be greatly improved, and this embodiment of the present disclosure effectively improved a recall rate and retrieval precision while ensuring the retrieval efficiency.

The deep learning model is trained in the foregoing manner, so that when depth feature extraction is performed with the trained deep learning model, the depth feature quality and retrieval precision may be ensured, and an image recall rate is also ensured, thereby effectively ensuring a coverage of the image retrieval method. In addition, in this embodiment of the present disclosure, the image retrieval precision may be ensured by SIFT feature-based similarity matching.

Based on the above, in this embodiment of the present disclosure, the depth feature quality of the image is ensured through semi-supervised learning, image recall is ensured by using the first layer of algorithm logic, and a calculation magnitude in connection with the similarity matching performed by the second layer of algorithm logic based on the manual feature is reduced through threshold control and an image candidate mechanism. The second layer of algorithm logic has relatively high retrieval precision, so that the usability of the image retrieval method may be greatly improved while ensuring the image recall rate and the retrieval precision, thereby shortening time consumption and ensuring efficiency of the image retrieval.

It is indicated by experimental data that using the first layer of algorithm logic can greatly reduce the calculation amount of the second layer of algorithm logic. Compared with directly performing homologous similarity matching by using SIFT features, the efficiency of the image retrieval solution provided in this embodiment of the present disclosure may be increased linearly as the quantity of retrieval images increases. For example, if TopN=50 and the quantity of retrieval images is 0.1 million, the retrieval efficiency may be increased by 0.1 million/50=2000 times.

In addition, the deep learning model is trained by using the foregoing deep clustering method; as compared with a model pre-trained with a public dataset, a capability of the deep learning model for recall similar images is improved by 20%, thereby effectively ensuring the coverage of the image retrieval solution. Experiments show that an image coverage ratio of the image retrieval solution reaches 99% or above, as compared with directly performing one-to-one matching by using SIFT features.

Based on the above, the image retrieval solution provided in this embodiment of the present disclosure can effectively improve the image recall rate and retrieval precision while ensuring the retrieval efficiency.

In addition, although the steps are displayed as following a sequence indicated by the arrows in the flowcharts of the embodiments, these steps are not necessarily performed in the sequence indicated by the arrows. Unless otherwise explicitly specified in the present disclosure, the sequence of executing the steps is not strictly limited, and the steps may be performed in another sequence. Moreover, at least some of the steps in the foregoing embodiments may include a plurality of sub-steps or a plurality of stages. The sub-steps or the stages are not necessarily performed at the same moment, but may be performed at different moments, which is not limited in the embodiments of the present disclosure.

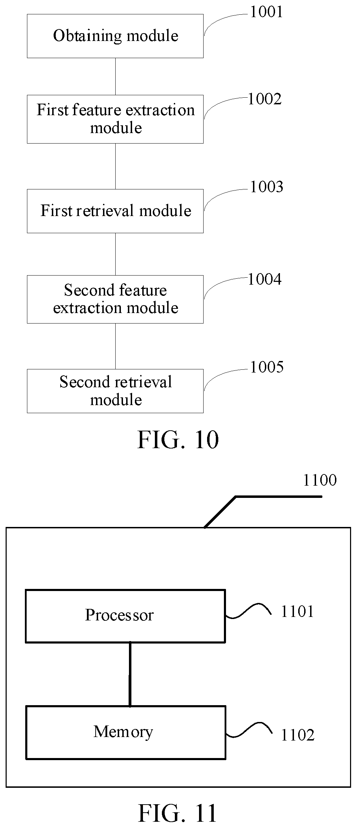

FIG. 10 is a schematic structural diagram of an image retrieval apparatus according to an embodiment of the present disclosure. Referring to FIG. 10, the apparatus includes:

an obtaining module 1001, configured to obtain an image;

a first feature extraction module 1002, configured to perform feature extraction on the image with a first feature extraction scheme to obtain a first feature, the first feature extraction scheme being a deep learning-based extraction scheme;

a first retrieval module 1003, configured to determine, based on the first feature of the image, at least one candidate image matching the image;

a second feature extraction module 1004, configured to perform feature extraction on the image and each candidate image with a second feature extraction scheme to obtain second features, the second feature extraction scheme being a non-deep learning-based extraction scheme; and

a second retrieval module 1005, configured to perform key point matching between the image and each candidate image sequentially based on the extracted second features; and determine in the at least one candidate image, a first image in which a quantity of key points matching with key points in the image is greater than a quantity threshold, as an image retrieval result.

According to the apparatus provided in this embodiment of the present disclosure, image retrieval is performed by combining the first feature with the second feature. The first feature is extracted according to the first feature extraction scheme, and the second feature is extracted according to the second feature extraction scheme, where the first feature extraction scheme is a deep learning-based extraction scheme, and the second feature extraction scheme is a non-deep learning based extraction scheme. In this embodiment of the present disclosure, advantages of the two features are integrated, where performing image retrieval based on the first feature has relatively low calculation costs, and performing image retrieval based on the second feature has advantages in the aspect of retrieval precision. Specifically, two layers of algorithm logic are used in this embodiment of the present disclosure. The first layer of algorithm logic extracts a first feature and performs image screening based on the extracted first feature, and only inputs selected candidate images into the second layer of algorithm logic for second feature extraction, which greatly reduces a calculation amount in the second layer of algorithm logic for performing image matching based on the second feature, and ensures the retrieval efficiency. Additionally, image matching is performed again based on the second features after images are screened based on the first feature, so that the retrieval precision is ensured. That is, in this embodiment of the present disclosure, the image retrieval precision is effectively improved while ensuring the retrieval efficiency.

In a possible implementation, the first feature extraction module is further configured to perform feature extraction on the image with a deep learning model, the deep learning model being trained with a first training dataset and a second training dataset.

The first training dataset is provided with labels, and the second training dataset is not provided with labels.

In a possible implementation, the deep learning model includes a convolutional neural network (CNN), a clustering branch, and a classification branch, and the apparatus further includes:

a training module, configured to input sample images included in the first training dataset and the second training dataset into the CNN; invoke a clustering model of the clustering branch to iteratively cluster feature data outputted by the CNN and output a clustering result as a pseudo-label to the classification branch; and invoke a classifier of the classification branch to obtain a pseudo-label-based loss value, and iteratively update a weight of the CNN according to the loss value.

In a possible implementation, the training module is further configured to obtain the pseudo-label-based loss value according to the pseudo-label and a result of classification performed by the classifier on the feature data outputted by the CNN

In a possible implementation, the training module is further configured to obtain normalized mutual information (NMI) of clustering results of two adjacent rounds, the NMI indicating stability of the deep learning model, and a larger value of the NMI indicating that the deep learning model is closer to a convergence state; and determine the convergence state of the deep learning model according to the NMI, and terminate the model training process after the deep learning model reaches the convergence state, a convergence condition of the deep learning model being that the value of the NMI reaches a stable value.

In a possible implementation, the first retrieval module is further configured to obtain feature distances between the first feature of the image and first features stored in a feature database, and sort retrieval images corresponding to the stored first features in descending order of the feature distances; and determine a specified quantity of retrieval images ranked top as the at least one candidate image.

In a possible implementation, the second feature extraction module is further configured to obtain a first feature of each candidate image in the at least one candidate image; obtain a feature distance between the first feature of each candidate image and the first feature of the image; and perform second feature extraction on a second image in the at least one candidate image, where

a feature distance between the second image and the image is less than a first distance threshold.

In a possible implementation, the apparatus further includes:

a receiving module, configured to receive an image retrieval request transmitted by a terminal;

the obtaining module being further configured to obtain the image from the image retrieval request; and

a transmission module, configured to transmit, after obtaining the image retrieval result, the image retrieval result to the terminal.

In a possible implementation, the second feature extraction module is further configured to perform, for any image on which feature extraction is to be performed, key point detection, to obtain a plurality of key points; and establish a descriptor for each detected key point, the descriptor being represented by a feature vector of a fixed dimension.

In a possible implementation, the second retrieval module is further configured to obtain a first set of key point descriptors of the image and a second set of key point descriptors of any candidate image; determine a feature distance between any two key point descriptors, one of the any two key point descriptors being from the first set of key point descriptors, and the other key point descriptor being from the second set of key point descriptors; determine matched key points in the image and the candidate image based on the obtained feature distance, any pair of matched key points having a feature distance less than a second distance threshold; and filter the matched key points to obtain final matched key points.

In a possible implementation, the second feature is a scale-invariant feature transform (SIFT) feature.

All of the above-mentioned optional technical solutions may be combined randomly to form optional embodiments of the present disclosure, and details are not described herein again.

In addition, in the forgoing embodiments, logic division of functional modules is merely exemplary for illustration the image retrieval performed by the image retrieval apparatus. In practice, the foregoing functions may be allocated to and completed by different functional modules on requirement. That is, an internal structure of the apparatus may be divided into different functional modules, which implement all or some of the functions described above. In addition, the image retrieval apparatus is based on a concept the same as that of the image retrieval method embodiments provided in the foregoing embodiments, therefore reference may be made to the method embodiments for the specific operations of the image retrieval apparatus, and details are not described herein.

FIG. 11 is a schematic structural diagram of an image retrieval device according to an embodiment of the present disclosure. The device 1100 may vary greatly due to different configurations or performance, and may include one or more processors (for example, central processing units (CPUs)) 1101 and one or more memories 1102. The memory 1102 stores at least one instruction, and the at least one instruction is loaded and executed by the processor 1101 to implement the following steps: obtaining an image, and performing feature extraction on the image with a first feature extraction scheme to obtain a first feature, the first feature extraction scheme being a deep learning-based extraction scheme; determining, based on the first feature of the image, at least one candidate image matching the image; performing feature extraction on the image and each candidate image with a second feature extraction scheme to obtain second features, the second feature extraction scheme being a non-deep learning-based extraction scheme; and performing key point matching between the image and each candidate image sequentially based on the extracted second features, and determining in the at least one candidate image, a first image in which a quantity of key points matching with key points in the image is greater than a quantity threshold, as an image retrieval result.

In some embodiments, the at least one instruction is loaded and executed by the processor 1101 to implement the following step: performing feature extraction on the image with a deep learning model, the deep learning model being trained with a first training dataset with labels and a second training dataset without labels.

In some embodiments, the deep learning model includes a convolutional neural network (CNN), a clustering branch, and a classification branch. Training the deep learning model includes: inputting sample images included in the first training dataset and the second training dataset into the CNN; invoking a clustering model of the clustering branch for iteratively clustering feature data outputted by the CNN and outputting an obtained clustering result as a pseudo-label to the classification branch; and invoking a classifier of the classification branch for obtaining a pseudo-label-based loss value and iteratively updating a weight of the CNN according to the loss value.

In some embodiments, the obtaining a pseudo-label-based loss value includes: obtaining the pseudo-label-based loss value according to the pseudo-label and a result of classification performed by the classifier on the feature data outputted by the CNN

In some embodiments, the at least one instruction is further loaded and executed by the processor 1101 to implement the following steps: obtaining normalized mutual information (NMI) of clustering results of two adjacent rounds, the NMI indicating stability of the deep learning model, and a larger value of the NMI indicating that the deep learning model is closer to a convergence state; and determining the convergence state of the deep learning model according to the NMI, and terminating the model training process after the deep learning model reaches the convergence state, a convergence condition of the deep learning model being that the value of the NMI reaches a stable value.

In some embodiments, the at least one instruction is loaded and executed by the processor 1101 to implement the following steps: obtaining feature distances between the first feature of the image and first features stored in a feature database, and sorting retrieval images corresponding to the stored first features in descending order of the feature distances; and determining a specified quantity of retrieval images ranked top as the at least one candidate image.

In some embodiments, the at least one instruction is loaded and executed by the processor 1101 to implement the following steps: obtaining a first feature of each candidate image; obtaining a feature distance between the first feature of each candidate image and the first feature of the image, and performing second feature extraction on a second image in the at least one candidate image, where a feature distance between the second image and the image is less than a first distance threshold.

In some embodiments, the at least one instruction is loaded and executed by the processor 1101 to implement the following steps: receiving an image retrieval request transmitted by a terminal, and obtaining the image from the image retrieval request; and after obtaining the image retrieval result, the apparatus further transmits the image retrieval result to the terminal.

In some embodiments, the at least one instruction is loaded and executed by the processor 1101 to implement the following steps: performing, for any image on which feature extraction is to be performed, key point detection to obtain a plurality of key points; and establishing a descriptor for each detected key point, the descriptor being represented by a feature vector of a fixed dimension.

In some embodiments, the at least one instruction is loaded and executed by the processor 1101 to implement the following steps: obtaining a first set of key point descriptors of the image and a second set of key point descriptors of any candidate image; determining a feature distance between any two key point descriptors, one of the any two key point descriptors being from the first set of key point descriptors, and the other key point descriptor being from the second set of key point descriptors; determining matched key points in the image and the candidate image based on the obtained feature distance, any pair of matched key points having a feature distance less than a second distance threshold; and filtering the matched key points to obtain final matched key points.

In some embodiments, the second feature is a scale-invariant feature transform (SIFT) feature.

Certainly, the device may further have components such as a wired or wireless network interface, a keyboard, and an input/output interface for inputting and outputting. The device may further include other components for implementing device functions. Details are not described herein.

In an exemplary embodiment, a computer-readable storage medium, for example, a memory having instructions stored thereon, is further provided. The instructions may be executed by the processor in the image retrieval device to implement the following steps: obtaining an image, and performing feature extraction on the image with a first feature extraction scheme to obtain a first feature, the first feature extraction scheme being a deep learning-based extraction scheme; determining, based on the first feature of the image, at least one candidate image matching the image, and performing feature extraction on the image and each candidate image with a second feature extraction scheme to obtain second features, the second feature extraction scheme being a non-deep learning-based extraction scheme; and performing key point matching between the image and each candidate image sequentially based on the extracted second features, and determining in the at least one candidate image, a first image in which a quantity of key points matching with key points in the image is greater than a quantity threshold, as an image retrieval result.

In some embodiments, the at least one instruction is loaded and executed by the processor to implement the following step: performing feature extraction on the image with a deep learning model, the deep learning model being trained with a first training dataset with labels and a second training dataset without labels.

In some embodiments, the deep learning model includes a convolutional neural network (CNN), a clustering branch, and a classification branch. Training the deep learning model includes: inputting sample images included in the first training dataset and the second training dataset into the CNN; invoking a clustering model of the clustering branch for iteratively clustering feature data outputted by the CNN and outputting an obtained clustering result as a pseudo-label to the classification branch; and invoking a classifier of the classification branch for obtaining a pseudo-label-based loss value and iteratively updating a weight of the CNN according to the loss value.

In some embodiments, the obtaining a pseudo-label-based loss value includes: obtaining the pseudo-label-based loss value according to the pseudo-label and a result of classification performed by the classifier on the feature data outputted by the CNN

In some embodiments, the at least one instruction is further loaded and executed by the processor to implement the following steps: obtaining normalized mutual information (NMI) of clustering results of two adjacent rounds, the NMI indicating stability of the deep learning model, and a larger value of the NMI indicating that the deep learning model is closer to a convergence state; and determining the convergence state of the deep learning model according to the NMI, and terminating the model training process after the deep learning model reaches the convergence state, a convergence condition of the deep learning model being that the value of the NMI reaches a stable value.

In some embodiments, the at least one instruction is loaded and executed by the processor to implement the following steps: obtaining feature distances between the first feature of the image and first features stored in a feature database, and sorting retrieval images corresponding to the stored first features in descending order of the feature distances; and determining a specified quantity of retrieval images ranked top as the at least one candidate image.

In some embodiments, the at least one instruction is loaded and executed by the processor to implement the following steps: obtaining a first feature of each candidate image; obtaining a feature distance between the first feature of each candidate image and the first feature of the image, and performing second feature extraction on a second image in the at least one candidate image, where a feature distance between the second image and the image is less than a first distance threshold.

In some embodiments, the at least one instruction is loaded and executed by the processor to implement the following steps: receiving an image retrieval request transmitted by a terminal, and obtaining the image from the image retrieval request; and after obtaining the image retrieval result, the storage medium further implements: transmitting the image retrieval result to the terminal.

In some embodiments, the at least one instruction is loaded and executed by the processor to implement the following steps: performing, for any image on which feature extraction is to be performed, key point detection to obtain a plurality of key points; and establishing a descriptor for each detected key point, the descriptor being represented by a feature vector of a fixed dimension.

In some embodiments, the at least one instruction is loaded and executed by the processor to implement the following steps: obtaining a first set of key point descriptors of the image and a second set of key point descriptors of any candidate image; determining a feature distance between any two key point descriptors, one of the any two key point descriptors being from the first set of key point descriptors, and the other key point descriptor being from the second set of key point descriptors; determining matched key points in the image and the candidate image based on the obtained feature distance, any pair of matched key points having a feature distance less than a second distance threshold; and filtering the matched key points to obtain final matched key points.

In some embodiments, the second feature is a scale-invariant feature transform (SIFT) feature.

For example, the computer-readable storage medium may be a read-only memory (ROM), a random access memory (RAM), a compact disc read-only memory (CD-ROM), a magnetic tape, a floppy disk, an optical data storage device, and the like.

A person of ordinary skill in the art may understand that all or some of the steps of the foregoing embodiments may be implemented by hardware, or may be implemented by a program instructing relevant hardware. The program may be stored in a computer-readable storage medium. The storage medium may be a ROM, a magnetic disk, an optical disc, or the like.

Optional embodiments of the present disclosure are described above, but the present disclosure is not limited thereto. Any modification, equivalent replacement, or improvement made within the spirit and principle of the present disclosure shall fall within the scope of the present disclosure.

**Claims**

1. An image retrieval method applicable in an image retrieval device, the method comprising:

   obtaining an image, and performing feature extraction on the image with a first feature extraction scheme to obtain a first feature, the first feature extraction scheme being a deep learning-based extraction scheme;
   determining, based on the first feature of the image, at least one candidate image matching the image, and performing feature extraction on the image and each candidate image with a second feature extraction scheme to obtain second features, the second feature extraction scheme being a non-deep learning-based extraction scheme; and
   performing key point matching between the image and each candidate image based on the extracted second features, and determining in the at least one candidate image, a first image in which a quantity of key points matching with key points in the image is greater than a quantity threshold, as an image retrieval result.

2. The method according to claim 1, wherein the performing feature extraction on the image with a first feature extraction scheme comprises:
   performing feature extraction on the image with a deep learning model, the deep learning model being trained with a first training dataset with labels and a second training dataset without labels.

3. The method according to claim 2, wherein the deep learning model comprises a convolutional neural network, a clustering branch, and a classification branch, and training the deep learning model comprises:

   inputting sample images comprised in the first training dataset and the second training dataset into the convolutional neural network;
   invoking a clustering model of the clustering branch for iteratively clustering feature data outputted by the convolutional neural network and outputting a clustering result as a pseudo-label to the classification branch; and
   invoking a classifier of the classification branch for obtaining a pseudo-label-based loss value and iteratively updating a weight of the CNN according to the loss value.

4. The method according to claim 3, wherein the obtaining a pseudo-label-based loss value comprises:
   obtaining the pseudo-label-based loss value according to the pseudo-label and a result of classification performed by the classifier on the feature data outputted by the convolutional neural network.

5. The method according to claim 3, further comprising:

obtaining normalized mutual information NMI of results of two adjacent rounds of clustering, the NMI indicating stability of the deep learning model, and a larger value of the NMI indicating that the deep learning model is closer to a convergence state; and
determining the convergence state of the deep learning model according to the NMI, and terminating the model training after the deep learning model reaches the convergence state, a convergence condition of the deep learning model being that the NMI reaches a stable value.

6. The method according to any one of claims 1 to 5, wherein the determining, based on a deep learning feature of the image, at least one candidate image matching the image comprises:

obtaining feature distances between the first feature of the image and first features stored in a feature database, and sorting retrieval images corresponding to the stored first features in descending order of the feature distances; and
determining a specified quantity of retrieval images ranked top as the at least one candidate image.

7. The method according to any one of claims 1 to 5, wherein the performing second feature extraction on each candidate image comprises:

obtaining a first feature of each candidate image; and
obtaining a feature distance between the first feature of each candidate image and the first feature of the image, and performing second feature extraction on a second image in the at least one candidate image, wherein a feature distance between the second image and the image is less than a first distance threshold.

8. The method according to any one of claims 1 to 5, wherein the obtaining an image comprises:

receiving an image retrieval request transmitted by a terminal, and obtaining the image from the image retrieval request; and
after obtaining the image retrieval result, the method further comprises: transmitting the image retrieval result to the terminal.

9. The method according to any one of claims 1 to 5, wherein the performing feature extraction on the image and each candidate image with a second feature extraction scheme comprises:
performing, for any image on which feature extraction is to be performed, key point detection to obtain a plurality of key points; and establishing a descriptor for each detected key point, the descriptor being represented by a feature vector of a fixed dimension.

10. The method according to claim 9, wherein the performing key point matching between the image and each candidate image sequentially based on the extracted second features comprises:

obtaining a first set of key point descriptors of the image and a second set of key point descriptors of any candidate image;
determining a feature distance between any two key point descriptors, one of the any two key point descriptors being from the first set, and the other of the any two key point descriptors being from the second set;
determining matched key points in the image and the candidate image based on the obtained feature distance, any pair of matched key points having a feature distance less than a second distance threshold; and
filtering the matched key points to obtain final matched key points.

11. The method according to any one of claims 1 to 5, wherein the second feature is a scale-invariant feature transform SIFT feature.

12. An image retrieval apparatus comprising:

an obtaining module configured to obtain an image;
a first feature extraction module configured to perform feature extraction on the image with a first feature extraction scheme to obtain a first feature, the first feature extraction scheme being a deep learning-based extraction scheme;
a first retrieval module configured to determine, based on the first feature of the image, at least one candidate image matching the image;
a second feature extraction module configured to perform feature extraction on the image and each candidate image with a second feature extraction scheme to obtain second features, the second feature extraction scheme being a non-deep learning-based extraction scheme; and
a second retrieval module configured to perform key point matching between the image and each candidate image sequentially based on the extracted second features, and determine in the at least one candidate image, a first image in which a quantity of key points matching with key points in the image is greater than a quantity threshold, as an image retrieval result.

**13.** A storage medium having at least one instruction stored thereon, the at least one instruction being loaded and executed by a processor to implement the following operations:

obtaining an image, and performing feature extraction on the image with a first feature extraction scheme to obtain a first feature, the first feature extraction scheme being a deep learning-based extraction scheme;

determining, based on the first feature of the image, at least one candidate image matching the image, and performing feature extraction on the image and each candidate image with a second feature extraction scheme to obtain second features, the second feature extraction scheme being a non-deep learning-based extraction scheme; and

performing key point matching between the image and each candidate image sequentially based on the extracted second features, and determining in the at least one candidate image, a first image in which a quantity of key points matching with key points in the image is greater than a quantity threshold, as an image retrieval result.

**14.** The storage medium according to claim 13, wherein the at least one instruction is loaded and executed by the processor to implement the following operations:

performing feature extraction on the image with a deep learning model, the deep learning model being trained with a first training dataset with labels and a second training dataset without labels.

**15.** The storage medium according to claim 14, wherein the deep learning model comprises a convolutional neural network CNN, a clustering branch, and a classification branch, and training the deep learning model comprises:

inputting sample images comprised in the first training dataset and the second training dataset into the CNN;

invoking a clustering model of the clustering branch for iteratively clustering feature data outputted by the CNN and outputting an obtained clustering result as a pseudo-label to the classification branch; and

invoking a classifier of the classification branch for obtaining a pseudo-label-based loss value and iteratively updating a weight of the CNN according to the loss value.

**16.** The storage medium according to claim 15, wherein the obtaining a pseudo-label-based loss value comprises:

obtaining the pseudo-label-based loss value according to the pseudo-label and a result of classification performed by the classifier on the feature data outputted by the CNN

**17.** The storage medium according to claim 15, wherein the at least one instruction is further loaded and executed by the processor to implement the following operations:

obtaining normalized mutual information NMI of results of two adjacent rounds of clustering, the NMI indicating stability of the deep learning model, and a larger value of the NMI indicating that the deep learning model is closer to a convergence state; and

determining the convergence state of the deep learning model according to the NMI, and terminating the model training after the deep learning model reaches the convergence state, a convergence condition of the deep learning model being that the value of the NMI reaches a stable value.

**18.** The storage medium according to any one of claims 13 to 17, wherein the at least one instruction is loaded and executed by the processor to implement the following operations:

obtaining feature distances between the first feature of the image and first features stored in a feature database, and sorting retrieval images corresponding to the stored first features in descending order of the feature distances; and

determining a specified quantity of retrieval images ranked top as the at least one candidate image.

**19.** The storage medium according to any one of claims 13 to 17, wherein the at least one instruction is loaded and executed by the processor to implement the following operations:

obtaining a first feature of each candidate image; and obtaining a feature distance between the first feature of each candidate image and the first feature of the image, and performing second feature extraction on a second image in the at least one candidate image, wherein

a feature distance between the second image and the image is less than a first distance threshold.

**20.** The storage medium according to any one of claims 13 to 17, wherein the at least one instruction is loaded and executed by the processor to implement the following operations:

receiving an image retrieval request transmitted by a terminal, and obtaining the image from the image retrieval request; and

after obtaining the image retrieval result, the storage medium further comprise: transmitting the image retrieval result to the terminal.

**21.** The storage medium according to any one of claims 13 to 17, wherein the at least one instruction is loaded and executed by the processor to implement the following operations:

performing, for any image on which feature extraction is to be performed, key point detection on the image, to obtain a plurality of key points; and establishing a descriptor for each detected key point, the descriptor being represented by a feature vector of a fixed dimension.

**22.** The storage medium according to claim 21, wherein the at least one instruction is loaded and executed by the processor to implement the following operations:

obtaining a first set of key point descriptors of the image and a second set of key point descriptors of any candidate image;

determining a feature distance between any two key point descriptors, one of the any two key point descriptors being from the first set of key point descriptors, and the other key point descriptor being from the second set of key point descriptors;

determining matched key points in the image and the candidate image based on the obtained feature distance, any pair of matched key points having a feature distance less than a second distance threshold; and

filtering the matched key points to obtain final matched key points.

**23.** The storage medium according to any one of claims 13 to 17, wherein the second feature is a scale-invariant feature transform SIFT feature.

**24.** An image retrieval device comprising a processor and a memory, the memory storing at least one instruction, the at least one instruction being loaded and executed by the processor to implement the following operations:

obtaining an image, and performing feature extraction on the image with a first feature extraction scheme to obtain a first feature, the first feature extraction scheme being a deep learning-based extraction scheme;

determining, based on the first feature of the image, at least one candidate image matching the image, and performing feature extraction on the image and each candidate image with a second feature extraction scheme to obtain second features, the second feature extraction scheme being a non-deep learning-based extraction scheme; and

performing key point matching between the image and each candidate image sequentially based on the extracted second features, and determining in the at least one candidate image, a first image in which a quantity of key points matching with key points in the image is greater than a quantity threshold, as an image retrieval result.

**25.** The device according to claim 24, wherein the at least one instruction is loaded and executed by the processor to implement the following operations:

performing feature extraction on the image with a deep learning model, the deep learning model being trained with a first training dataset and a second training dataset, wherein

the first training dataset is a dataset provided with a label, and the second training dataset is a dataset not provided with a label.

**26.** The device according to claim 25, wherein the deep learning model comprises a convolutional neural network CNN, a clustering branch, and a classification branch, and a training process of the deep learning model comprises:

inputting sample images comprised in the first training dataset and the second training dataset into the CNN;

invoking a clustering model of the clustering branch for iteratively clustering feature data outputted by the CNN and outputting an obtained clustering result as a pseudo-label to the classification branch; and

invoking a classifier of the classification branch for obtaining a pseudo-label-based loss value and iteratively updating a weight of the CNN according to the loss value.

**27.** The device according to claim 26, wherein the obtaining a pseudo-label-based loss value comprises: obtaining the pseudo-label-based loss value according to the pseudo-label and a result of classification performed by the classifier on the feature data outputted by the CNN

**28.** The device according to claim 26, wherein the at least one instruction is further loaded and executed by the processor to implement the following operations:

obtaining normalized mutual information NMI of results of two adjacent rounds of clustering, the NMI indicating stability of the deep learning model, and a larger value of the NMI indicating that the deep learning model is closer to a convergence state; and

determining the convergence state of the deep learning model according to the NMI, and terminating the model training process after the deep learning model reaches the convergence state, a convergence condition of the deep learning model being that the value of the NMI reaches a stable value.

29. The device according to any one of claims 24 to 28, wherein the at least one instruction is loaded and executed by the processor to implement the following operations:

obtaining feature distances between the first feature of the image and first features stored in a feature database, and sorting retrieval images corresponding to the stored first features in descending order of the feature distances; and determining a specified quantity of retrieval images ranked top as the at least one candidate image.

30. The device according to any one of claims 24 to 28, wherein the at least one instruction is loaded and executed by the processor to implement the following operations:

obtaining a first feature of each candidate image; and obtaining a feature distance between the first feature of each candidate image and the first feature of the image, and performing second feature extraction on a second image in the at least one candidate image, wherein a feature distance between the second image and the image is less than a first distance threshold.

31. The device according to any one of claims 24 to 28, wherein the at least one instruction is loaded and executed by the processor to implement the following operations:

receiving an image retrieval request transmitted by a terminal, and obtaining the image from the image retrieval request; and after obtaining the image retrieval result, the device further comprise: transmitting the image retrieval result to the terminal.

32. The device according to any one of claims 24 to 28, wherein the at least one instruction is loaded and executed by the processor to implement the following operations:

performing, for any image on which feature extraction is to be performed, key point detection on the image, to obtain a plurality of key points; and establishing a descriptor for each detected key point, the descriptor being represented by a feature vector of a fixed dimension.

33. The device according to claim 32, wherein the at least one instruction is loaded and executed by the processor to implement the following operations:

obtaining a first set of key point descriptors of the image and a second set of key point descriptors of any candidate image; determining a feature distance between any two key point descriptors, one of the any two key point descriptors being from the first set of key point descriptors, and the other key point descriptor being from the second set of key point descriptors; determining matched key points in the image and the candidate image based on the obtained feature distance, any pair of matched key points having a feature distance less than a second distance threshold; and filtering the matched key points to obtain final matched key points.

34. The device according to any one of claims 24 to 28, wherein the second feature is a scale-invariant feature transform SIFT feature.

FIG. 1

FIG. 2

Obtain an image, and perform feature extraction on the image according to a first feature extraction manner to obtain a first feature, the first feature extraction manner being a deep learning-based extraction manner — 301

Determine, based on the first feature of the image, at least one candidate image matching the image — 302

Perform feature extraction on the image and each candidate image according to a second feature extraction manner to obtain a second feature, the second feature extraction manner being a non-deep learning-based extraction manner — 303

Perform key point matching processing on the image with each candidate image sequentially based on the extracted second feature, and determine a first image in the at least one candidate image as an image retrieval result, a quantity of matched key points between the first image and the image being greater than a quantity threshold — 304

FIG. 3

405
Second training dataset not provided with a label

404
First training dataset provided with a label

401
Convolutional neural network

402
DeepCluster non-supervised learning branch

403
Supervised learning branch

FIG. 4

Input sample images included in the first training dataset and the second training dataset into the CNN — 501

Invoke a clustering model of the clustering branch, iteratively cluster feature data outputted by the CNN, and output an obtained clustering result as a pseudo-label to the classification branch — 502

Invoke a classifier of the classification branch, obtain a loss value based on the pseudo-label, and iteratively update a weight of the CNN according to the loss value — 503

FIG. 5

Image

| Convolution layer conv1_1 | 601 |
| Convolution layer conv1_2 |
| Pooling layer pool1 |

| Convolution layer conv2_1 |
| Convolution layer conv2_2 |
| Pooling layer pool2 |

| Convolution layer conv3_1 |
| Convolution layer conv3_2 |
| Convolution layer conv3_3 |
| Pooling layer pool3 |

| Convolution layer conv4_1 |
| Convolution layer conv4_2 |
| Convolution layer conv4_3 |
| Pooling layer pool4 |

| Convolution layer conv5_1 |
| Convolution layer conv5_2 |
| Convolution layer conv5_3 |
| Pooling layer pool5 |

| Fully connected layer fc6 |
| Fully connected layer fc7 |
| Fully connected layer fc8 |

FIG. 6

FIG. 7

FIG. 8

| Terminal | | Image retrieval device |
|---|---|---|

901: Transmit, by the terminal, an image retrieval request to the image retrieval device, the image retrieval request including an image

902: Obtain, by the image retrieval device, the image from the image retrieval request after receiving the image retrieval request transmitted by the terminal

903: Perform, by the image retrieval device, depth feature extraction on the image based on a trained deep learning model, a depth feature being a feature extracted based on a deep learning method

904: Determine, by the image retrieval device, at least one candidate image that is homologous similar to the image based on a depth feature of the image and depth features of retrieval images stored in a feature database

905: Perform, by the image retrieval device, manual feature extraction on the image and the at least one candidate image separately, a manual feature being a feature extracted based on a non-deep learning method

906: Perform, by the image retrieval device, key point matching on the image with each candidate image sequentially based on the extracted manual feature, and determine a first image in the at least one candidate image as an image retrieval result that is homologous similar to the image, a quantity of matched key points between the first image and the image being greater than a quantity threshold

907: Transmit, by the image retrieval device, the image retrieval result to the terminal

FIG. 9

Obtaining module — 1001

First feature extraction module — 1002

First retrieval module — 1003

Second feature extraction module — 1004

Second retrieval module — 1005

FIG. 10

1100

Processor — 1101

Memory — 1102

FIG. 11

**INTERNATIONAL SEARCH REPORT**

| International application No. |
|---|
| **PCT/CN2020/126086** |

**A. CLASSIFICATION OF SUBJECT MATTER**

G06F 16/583(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT; CNKI; WPI; EPODOC: 图像, 图片, 检索, 特征, 提取, 深度学习, 神经网络, 训练, 模型, 关键点, 匹配, 阈值, image, picture, search, feature, extraction, deep learning, neural network, train, model, key point, match, threshold

**C. DOCUMENTS CONSIDERED TO BE RELEVANT**

| Category* | Citation of document, with indication, where appropriate, of the relevant passages | Relevant to claim No. |
|---|---|---|
| PX | CN 111339343 A (TENCENT TECHNOLOGY SHENZHEN CO., LTD.) 26 June 2020 (2020-06-26) claims 1-14 | 1-34 |
| A | CN 104572971 A (ANKE WISDOM CITY TECHNOLOGY (CHINA) CO., LTD.) 29 April 2015 (2015-04-29) description, paragraphs [0050]-[0108] | 1-34 |
| A | CN 110059807 A (TENCENT TECHNOLOGY SHENZHEN CO., LTD.) 26 July 2019 (2019-07-26) entire document | 1-34 |
| A | US 2016307070 A1 (HUAWEI TECHNOLOGIES CO., LTD.) 20 October 2016 (2016-10-20) entire document | 1-34 |
| A | CN 106445939 A (ALIBABA GROUP HOLDING LIMITED) 22 February 2017 (2017-02-22) entire document | 1-34 |

☐ Further documents are listed in the continuation of Box C.  ☑ See patent family annex.

| | |
|---|---|
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **31 December 2020** | **03 February 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/126086**

| Patent document cited in search report | | | Publication date (day/month/year) | Patent family member(s) | | | Publication date (day/month/year) |
|---|---|---|---|---|---|---|---|
| CN | 111339343 | A | 26 June 2020 | None | | | |
| CN | 104572971 | A | 29 April 2015 | None | | | |
| CN | 110059807 | A | 26 July 2019 | None | | | |
| US | 2016307070 | A1 | 20 October 2016 | CN | 104751198 | A | 01 July 2015 |
| | | | | WO | 2015096565 | A1 | 02 July 2015 |
| CN | 106445939 | A | 22 February 2017 | WO | 2017020741 | A1 | 09 February 2017 |

Form PCT/ISA/210 (patent family annex) (January 2015)

**REFERENCES CITED IN THE DESCRIPTION**

**Patent documents cited in the description**

- CN 202010088101